# EUROPEAN PATENT APPLICATION

(11) **EP 1 419 881 A1**
(43) Date of publication of application: **19.05.2004**
(21) Application number: 02425692.7
(22) Date of filing: 13.11.2002
(51) Int. Cl.: B32B 17/10

(54) **Process and furnace for manufacture of laminated glass plates**

(71) Applicant: Omnia Soc. a r.l., 04011 Aprilia (LT) (IT)
(72) Inventor: Tomei, Roberto, c/o Omnia Soc. a r.l., 04011 Aprilia (LT) (IT)
(74) Representative: Iannone, Carlo Luigi

(57) **Abstract**

The invention concerns a process and furnace (1) for manufacture of laminated glass plate, said laminated glass plate being comprised of two glass plates with a copolymer film interposed, said furnace (1) providing an insulated room, provided with an opening and closure door, and shelves (2) for the insertion and the support of the glass to be laminated, heating means, a vacuum pump (6), to create vacuum within the room, a control panel (4), provided with programmed PLC.

## Description

The present invention relates to a furnace for manufacture of laminated glass plates.

The invention further relates to a process for the production of laminated glass plates.

More specifically, the invention concerns a furnace of the above kind, which allows manufacturing laminated glass plates with noticeably reduced costs, and by a noticeably simpler process.

As it is well known, a laminated glass plate is a panel comprised of two or more glass plates coupled all along their surface by interposition of plastic material.

Particularly, laminated glass plate is used as safety glass. In fact, just in view of its structure, in case of failure, fragments firmly remain adherent to the plastic material, so that from the plate it is not possible the detachment of glass pieces having sizes dangerous for the safety of the persons.

Consequently, just in view of the structural features and of the permanence in use of the panel, laminated glass sheet is undoubtedly the best safety glass under the safety point of view.

At present, exist different methods for manufacture of laminated glass plates.

A first method provides the manufacture of laminated sheet plates employing a polyvinylbutyrral film, an unstable material that must be maintained at constant temperature and humidity within a climatised room.

Said method provides the following steps:
- assembly of two or more horizontal glass plates with the polyvinylbutyrral film;
- introduction within the furnace for fusing the film;
- extraction of the laminate, after a set temperature time period within the furnace;
- passage within the mangle - press for gluing;
- stacking of the glued plates on an oblique position carriage;
- introduction into a autoclave, within which it is subjected to a further gluing and clearness process;
- end of the cycle, obtaining the finished product.

This specific manufacture system is particularly used for large mass production and for standard sized plates.

A further method for the laminated glass plates is that known as "under vacuum bag".

In this case, film employed is an aceto-vinyl copolymer (EVASAFE), chemically stable and maintained at room temperature.

The above mentioned method provides the following manufacture steps:
- assembly of only two glass plates with the film for each cycle;
- winding the thus obtained assembly within a thermo-welded silicone cloth, realising the air vacuum;
- introduction within the heating furnace for the fusion of the film for set time period and temperature;
- cooling within the furnace up to room temperature;
- extraction and removal of the cloth;
- end of the cycle, obtaining the finished product.

The last method allows laminating also curved glass plates.

Within this technical framework, the Applicant has realised a new system for the realisation of laminated glass plates that allows obtaining a higher manufacture production, with lower costs and a higher quality.

It is therefore specific object of the present invention a furnace for manufacture of laminated glass plate, said laminated glass plate being comprised of two glass plates with a copolymer film interposed, said furnace providing an insulated room, provided with an opening and closure door, and shelves for the insertion and the support of the glass to be laminated, heating means, a vacuum pump, to create vacuum within the room, a control panel, provided with programmed PLC.

Preferably, according to the invention, said opening and closure door is mounted on guides allowing the lateral sliding during the opening.

Still according to the invention, said insulation room is comprised inside of fibre-ceramic and of fibreglass within a gap.

Furthermore, according to the invention, the furnace support structure is comprised of a zinc plated tubular element.

Always according to the invention, said heating means can be comprised by resistance controlled by thermocouples.

Preferably, according to the invention, said control panel provides a vacuum control manometer.

In the preferred embodiment of the furnace according to the invention, said shelves can be extracted.

Further, according to the invention, said copolymer is an aceto-vynil copolymer (EVASAFE).

The invention further concerns a process for laminating glass plates, comprising the following steps of:
- assembling two glass plates, interposing a aceto-vynil copolymer film;
- prosecuting said step until filling the shelves available within the furnace;
- closing the furnace and applying the vacuum, for set time period and temperature in function of the glass to be laminated;
- opening of the door and cooling of the laminated glasses.

The present invention will be now described, for illustrative but not limitative purposes, according to its preferred embodiments, with particular reference to the figures of the enclosed drawings, wherein:
figure 1 is a perspective view of a furnace according to the present invention;
figure 2 is a front view of the furnace of figure 1, with the door open;
figure 3 shows the control panel of the furnace of figure 1;
figure 4 particularly shows the pump of the furnace according to the invention;
figure 5 is a perspective view, in particular of the opening of the furnace according to the invention;
figure 6 is a front view in particular of the opening of the furnace according to the invention;
figure 7 is a first perspective view of a furnace according to the invention with the door open;
figure 8 is a second perspective view of a furnace according to the invention with the door open;
figure 9 shows a particular of the oven according to the invention; and
figure 10 is a particular front view of the furnace according to the invention.

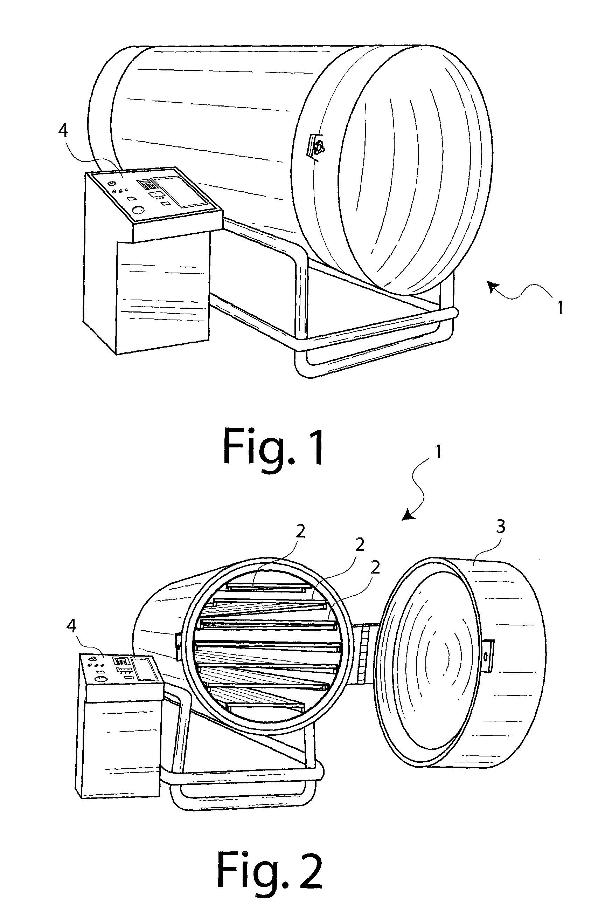

Observing the figures of the enclosed drawings, and at first figures 1 and 2, it is shown a furnace 1 according to the invention, that can be realised with different dimensions and performances according to the specific needing.

Only for illustrative but not illustrative purposes, it is possible to mention two kinds of furnace 1 according to the invention that can be realised, said examples must not be used to limit the scope of the invention.

A first embodiment provides a useful surface of 10 m², divided in seven shelves 2 (embodiment specifically shown in figures 1 and 2), while a second embodiment provides a useful surface of 40 m², divided in ten shelves.

Furnace 1 according to the invention is preferably comprised of hot zinc plated steel, having a thickness of 6 mm and a sealing welding.

It is further provided insulation comprised of fibre-ceramic having an inside thickness of 5 mm and fibreglass having a thickness of 40 mm within the gap.

The support structure is comprised of zinc plated tubular, with an inside coating comprised of holed stainless steel sheet.

Heating is obtained by six resistances controlled by eight thermocouples.

In the front, it is provided a hinged door 3, allowing accessing within the furnace 1, and mainly to the trays 2, for the insertion and the extraction of the glass plates.

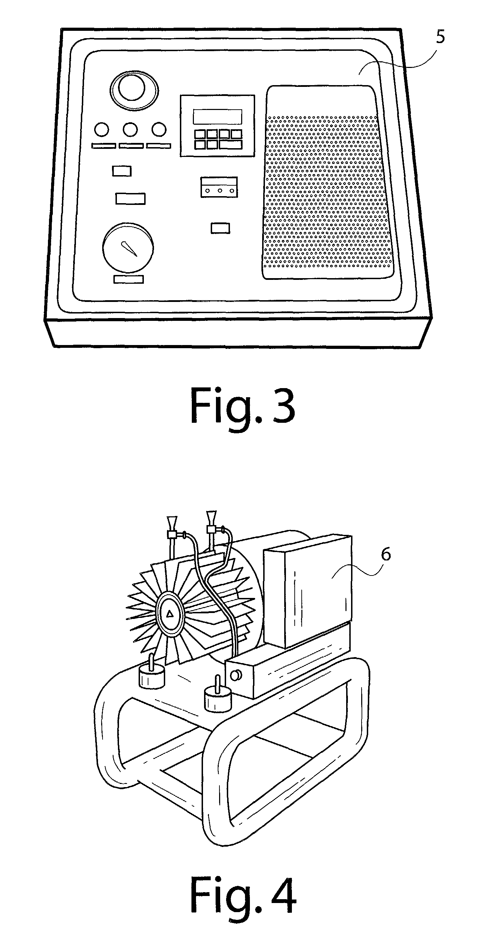

A control group 4 provides a control of the temperature by PLC on the electric panel 5 shown in figure 3. PLC allows using 20 programs for the different kind of productions.

As it can be seen in figure 4, it is further provided a closed circuit oil lubricated pump 6 for vacuum, controlled by PLC. Pump 6 is provided with a vacuum control manometer on the electric panel 5.

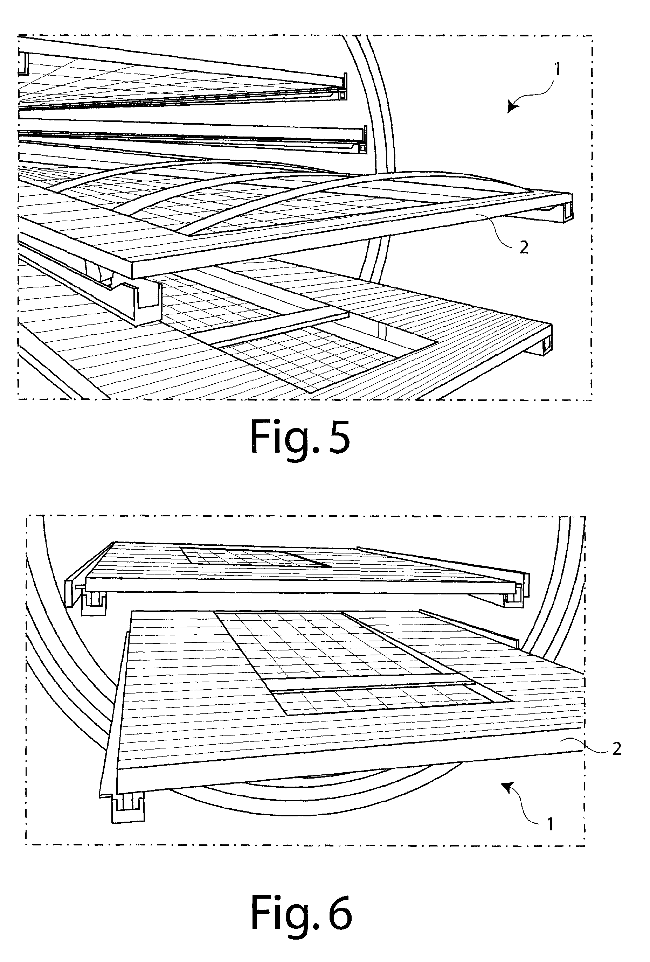

As it can be seen in figures 5 and 6, furnace 1 according to the invention provides extractable shelves 2, mounted on high temperature resistant bearings.

By the furnace 1 according to the invention, in the same manufacture cycle flat and curved glass plates having the same thickness can be introduced (figure 5), since for each thickness the operation program to be set changes.

By the furnace according to the invention it is possible to laminate mirrors, mosaic and/or fused coloured artistic glasses, flat and curved glasses can be laminated.

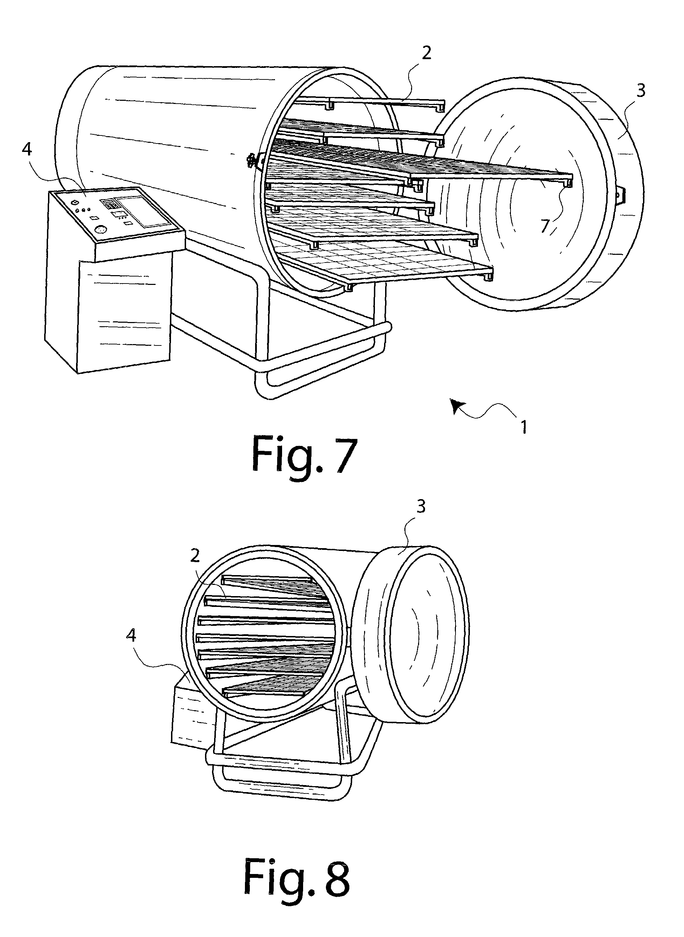

As it is well illustrated in figure 8, closure door 3 is hinged and open at 90°, and it is mounted on guides 7 allowing the lateral sliding, up to having the right part available (see particularly figure 8).

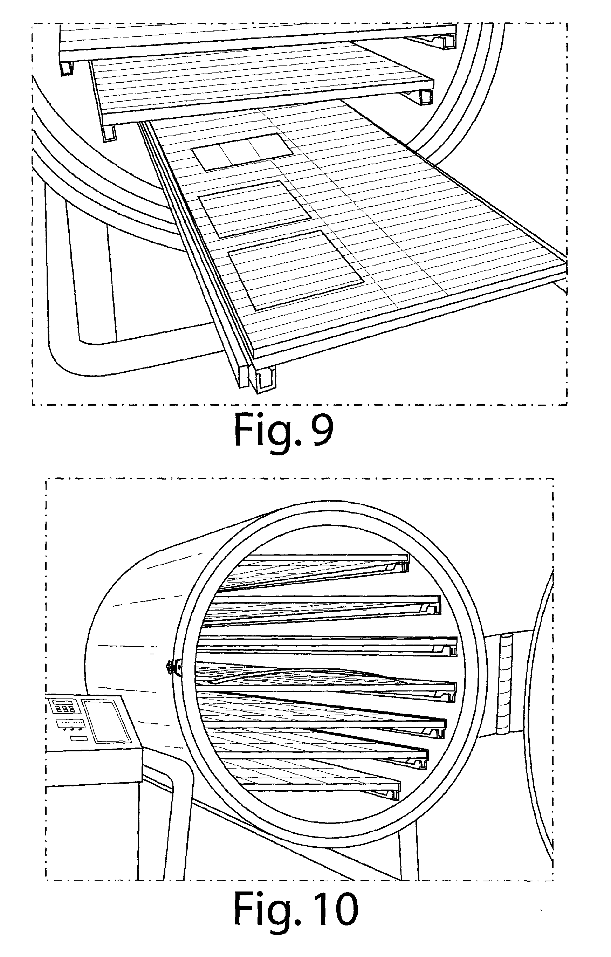

Glasses to be laminated can be put on each shelf 3, having each dimension (see figures 9 and 10).

In the following, the lamination cycle will be shortly described.

At first, two glasses are assembled, by interposing an aceto-vynil copolymer film (EVAFASE), up to filling each shelf available in the furnace.

Then, the door is closed, starting the vacuum phase with the consequent heating, with set time and temperature.

After the end of the cycle, the furnace is opened, and the whole is cooled.

The above mentioned method avoids the various operation steps and noticeably reduces the manufacture times.

Further, it can be used without the need of qualified personnel, since for each kind and thickness of glass, it is provided a specific operation program.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Furnace for manufacture of laminated glass plate, said laminated glass plate being comprised of two glass plates with a copolymer film interposed, said furnace providing an insulated room, provided with an opening and closure door, and shelves for the insertion and the support of the glass to be laminated, heating means, a vacuum pump, to create vacuum within the room, a control panel, provided with programmed PLC.

2. Furnace according to claim 1, **characterised in that** said opening and closure door is mounted on guides allowing the lateral sliding during the opening.

3. Furnace according to one of the preceding claims, **characterised in that** said insulation room is comprised inside of fibreceramic and of fibreglass within a gap.

4. Furnace according to one of the preceding claims, **characterised in that** the furnace support structure is comprised of zinc plated tubular element.

5. Furnace according to one of the preceding claims, **characterised in that** said heating means can be comprised by resistance controlled by thermocouples.

6. Furnace according to one of the preceding claims, **characterised in that** said control panel provides a vacuum control manometer.

7. Furnace according to one of the preceding claims, **characterised in that** said shelves can be extracted.

8. Furnace according to one of the preceding claims, **characterised in that** said copolymer is an aceto-vynil copolymer (EVASAFE).

9. Process for laminating glass plates, comprising the following steps of:
- assembling two glass plates, interposing a aceto-vynil copolymer film;
- prosecuting said step until filling the shelves available within the furnace;
- closing the furnace and applying the vacuum, for set time period and temperature in function of the glass to be laminated;
- opening of the door and cooling of the laminated glasses.

10. Furnace according to each one of the preceding claims, substantially as illustrated and described.
